# EUROPÄISCHE PATENTSCHRIFT

(11) **EP 2 622 119 B1**
(45) Veröffentlichungstag und Bekanntmachung des Hinweises auf die Patenterteilung: **29.07.2015**
(21) Anmeldenummer: 11738721.7
(22) Anmeldetag: 01.08.2011
(51) Int. Cl.: D06F 39/02

(54) **VERFAHREN ZUM BETREIBEN EINER DOSIERVORRICHTUNG**
METHOD FOR OPERATING A METERING DEVICE
PROCEDE POUR FAIRE FONCTIONNER UN DISPOSITIF DE DOSAGE

(30) Priorität: 17.01.2011 DE 102011002752
(43) Veröffentlichungstag der Anmeldung: 07.08.2013
(73) Patentinhaber: Henkel AG&Co. KGAA, 40589 Düsseldorf (DE)
(72) Erfinder: JUCKEL, Thomas, 40789 Monheim (DE); BRÜCKNER, Erik, 40723 Hilden (DE); WRUBBEL, Noelle, 40591 Düsseldorf (DE)
(86) Internationale Anmeldenummer: PCT/EP2011/063220
(87) Internationale Veröffentlichungsnummer: WO 2012/097884

(56) Entgegenhaltungen:
- WO-A2-2008/012613
- DE-A1-102009 006 234
- US-A1- 2003 224 965

## Beschreibung

Die Erfindung betrifft ein Verfahren zum Betreiben einer Dosiervorrichtung und eine Dosiervorrichtung.

Eine derartige Dosiervorrichtung ist insbesondere zur Verwendung in einem Wäschetrockner geeignet. Dabei soll die Dosiervorrichtung ein zu dosierendes Mittel an Wäsche im Wäschetrockner während des Trockenvorgangs abgeben. Ein zu dosierendes Mittel kann beispielsweise ein Duftstoff sein. Durch das Verfahren zum Betreiben der Dosiervorrichtung kann die Abgabe des zu dosierenden Mittels gesteuert oder geregelt werden. Eine Anwendung ist aber auch in einer Wasch- oder Spülmaschine denkbar.

Aus der WO 2008/012613 A2 ist ein Spender für das Ausgeben eines Duftes in einer Geschirrspülmaschine bekannt. Dieser Spender umfasst eine Aufnahmeeinheit zur Aufnahme einer zu spendenden Substanz und einen Ventilmechanismus mit veränderbaren Öffnungen, durch die die Substanz in die Umgebung entweichen kann. Ein temperatursensitives Element ist vorgesehen, welches seine Form in Abhängigkeit einer Umgebungstemperatur verändern kann. Das temperatursensitive Element ist derart angeordnet, dass eine temperaturbedingte Formänderung den Ventilmechanismus betätigt, um die Größe der Öffnungen zu verändern. Die Größe der Öffnung hängt dann im Wesentlichen vom Betrag der Umgebungstemperatur ab.

Die US 2009/0293923 A1 offenbart eine Spendervorrichtung für ein Reinigungsmittel, welches entfernbar in eine Waschmaschine eingebracht werden kann. Dabei ist eine Kammer als Reservoir vorgesehen, um Reinigungsmittel aufzunehmen. Ferner umfasst die Vorrichtung Mittel zum Erkennen der Anwesenheit von Wasser in der Umgebung. Es sind Pumpmittel vorgesehen, um das Reinigungsmittel aus der Kammer zu fördern. US 2003/0224965 offenbart eine Dosiervorrichtung zur Abgabe von Duftstoffen in einem Trockner.

Basierend hierauf ist es Aufgabe der vorliegenden Erfindung, ein verbessertes Verfahren zum Betreiben einer Dosiervorrichtung sowie eine Dosiervorrichtung bereit zu stellen. Dabei ist es insbesondere wünschenswert, dass der Wirkungsgrad einer derartigen Dosiervorrichtung erhöht wird, was insbesondere dadurch ausgedrückt werden kann, dass mit möglichst wenig Einsatz von zu dosierendem Mittel eine möglichst große Wirkung erzielt wird.

Die der Erfindung zugrunde liegende Aufgabe wird gelöst durch ein Verfahren zum Betreiben einer Dosiervorrichtung, das die Merkmale des Anspruchs 1 aufweist.

Durch das Öffnen des Ventildurchgangs beim Absinken der Umgebungstemperatur kann erreicht werden, dass zu dosierendes Mittel an die Umgebung dann abgegeben wird, wenn der Vorgang, in dem die Dosiervorrichtung angewendet ist, sich seinem Ende neigt. Zum Beispiel bei Wäschetrocknern oder Waschmaschinen wird nämlich zunächst die Temperatur bis zu einer Betriebstemperatur erhöht, wobei bei der Betriebstemperatur der eigentliche Vorgang, nämlich z.B. das Trocknen oder Waschen der Wäsche erfolgt. Ein Ausgeben von zu dosierendem Mittel zu diesem frühen Zeitpunkt ist jedoch unerwünscht, da dieses Mittel während der weiteren Behandlung durch ständiges Umwälzen von Luft oder Wasser wieder aus der Wäsche und ggf. aus dem Innenraum der Maschine entfernt wird. Durch das Öffnen des Ventildurchgangs erst dann, wenn die Umgebungstemperatur absinkt, kann dieser unnötige Einsatz von zu dosierendem Mittel vermieden werden. Durch die weitere Bedingung für das Öffnen, dass in der Umgebung der Dosiervorrichtung nämlich auch eine definierte erste und/oder zweite Mindesttemperatur vorhanden sein muss, kann ein unbeabsichtigtes Öffnen des Ventildurchgangs bei jeglichem Absinken der Temperatur vermieden werden.

Unter einem Ansteigen der Umgebungstemperatur wird im Rahmen der vorliegenden Erfindung ein definiertes Erhöhen der Umgebungstemperatur hin zu einer Betriebstemperatur des jeweiligen Vorgangs, insbesondere eines Trockenvorgangs, verstanden. Unter einem Absinken der Umgebungstemperatur wird im Rahmen der vorliegenden Erfindung ein definiertes Verringern der Umgebungstemperatur von der Betriebstemperatur des jeweiligen Vorgangs verstanden. Etwaige Temperaturschwankungen, die während des Betriebes auftreten können, bleiben davon ausgenommen. So ist unter einem Temperaturanstieg eine im Wesentlichen ununterbrochene Erhöhung der Umgebungstemperatur von zumindest 10°C zu verstehen, die in einem Zeitraum von nicht mehr als 10 Minuten stattfindet. So ist unter einem Absinken der Temperatur eine im Wesentlichen ununterbrochene Verringerung der Umgebungstemperatur von zumindest 10°C zu verstehen, die in einem Zeitraum von nicht mehr als 10 Minuten stattfindet. Temperaturänderungen mit einem betragsmäßig geringeren mittleren Gradienten werden insbesondere nicht als ein Anstieg oder ein Absinken im Rahmen der vorliegenden Erfindung angesehen.

Unter der Umgebungstemperatur ist im Rahmen der vorliegenden Erfindung grundsätzlich die Temperatur der Umgebung der Dosiervorrichtung gemeint. Wenn sich beispielsweise die Dosiervorrichtung in einem Wäschetrockner befindet, dann ist die Temperatur im Inneren des Wäschetrockners die Umgebungstemperatur.

Der Ventildurchgang wird geschlossen, wenn die Umgebungstemperatur ansteigt. Hierdurch kann grundsätzlich vermieden werden, dass bereits zu Beginn eines Vorgangs zu dosierendes Mittel abgegeben wird. Hierdurch kann zu dosierendes Mittel eingespart werden. Insbesondere in einem Wäschetrockenvorgang kann die Wirkung von zu dosierendem Mittel schnell verfliegen, wenn das zu dosierende Mittel frühzeitig auf die zu trocknende Wäsche aufgebracht wird. Dies gilt weitgehend auch für andere Vorgänge.

Vorzugsweise wird der Ventildurchgang geschlossen, wenn die Umgebungstemperatur unter eine definierte zweite Mindesttemperatur sinkt. Hierdurch kann erreicht werden, dass bei Abschluss eines Vorgangs, beispielsweise bei Beenden eines Wäschetrockenvorgangs, der Ventildurchgang geschlossen ist. Hierdurch kann zu dosierendes Mittel eingespart werden, da bei Beendigung des Vorganges in der Regel kein zu dosierendes Mittel mehr an die Wäsche abgegeben werden soll.

Vorzugsweise umfasst die Ventileinheit zumindest zwei, nämlich zumindest ein erstes und ein zweites Ventilmittel, die jeweils zwischen einem Freigabezustand und einem Schließzustand schaltbar sind, wobei der Ventildurchgang durch Überführen zumindest eines der Ventilmittel in den Schließzustand geschlossen wird. Durch das Vorsehen von zwei oder auch mehreren Ventilmitteln kann erreicht werden, dass eine Funktionstrennung innerhalb der Ventileinheit erreicht wird. So kann ein Ventilmittel, insbesondere das erste Ventilmittel in Abhängigkeit von Änderungen eines Temperaturverlaufs zwischen Zuständen überführbar sein, vorzugsweise im Wesentlichen unabhängig von der absoluten Temperatur. Ein anderes Ventilmittel, insbesondere das zweite Ventilmittel, kann in Abhängigkeit einer absoluten Temperatur überführbar sein. Durch eine derartige Funktionstrennung kann das Öffnen und Schließen des Ventildurchganges in einfacher Weise in Abhängigkeit von unterschiedlichen Bedingungen gebracht werden, insbesondere sowohl von der Änderung der Temperatur als auch von der absoluten Temperatur. Durch die Funktionstrennung kann eine Feinabstimmung der Ventileinheit erleichtert werden. Der Freigabe- bzw. der Schließzustand kann durch eine Freigabe- bzw. Schließstellung realisiert sein, wobei sich genannte Stellungen durch unterschiedliche örtliche Lagen oder Ausrichtungen der Ventilmittel voneinander unterscheiden.

Vorzugsweise wird eines der Ventilmittel, insbesondere das erste Ventilmittel, zumindest zeitweise, insbesondere stets, bei ansteigender Umgebungstemperatur in den Schließzustand beaufschlagt. Hierdurch kann erreicht werden, dass zumindest zeitweise, vorzugsweise stets, bei ansteigender Umgebungstemperatur die Ventileinheit geschlossen ist.

Vorzugsweise ist vorgesehen, dass eines der Ventilmittel, insbesondere das erste Ventilmittel, nur bei sinkender Umgebungstemperatur in den Freigabezustand überführt wird. Hierdurch kann sichergestellt werden, dass der Ventildurchgang nur dann geöffnet wird, wenn sich der Vorgang seinem Ende nähert. Zu dosierendes Mittel kann dadurch effizienter eingesetzt werden.

Vorzugsweise wird eines der Ventilmittel, insbesondere das zweite Ventilmittel, nur in den Freigabezustand überführt, wenn die Umgebungstemperatur über einer ersten definierten Mindesttemperatur liegt. Hierdurch kann ein Temperaturbereich definiert werden, bei dem der Ventildurchgang geöffnet werden kann. Ferner kann ein unbeabsichtigtes Öffnen des Ventildurchgangs bei geringen Temperaturen vermieden werden.

Vorzugsweise wird das zweite Ventilmittel bei Unterschreiten einer zweiten definierten Mindesttemperatur in den Schließzustand, insbesondere stets in den Schließzustand überführt. Hierdurch kann ein Temperaturbereich definiert werden, bei dem der Ventildurchgang insbesondere nie geöffnet sein soll. Ein Beaufschlagen des zweiten Ventilmittels kann durch Rückstellmittel vollzogen sein, die das zweite Ventilmittel grundsätzlich in den Schließzustand beaufschlagen, und insbesondere bei Bedarf durch andere Aktuatoren übersteuert werden kann.

Vorzugsweise ist vorgesehen, dass bei Erreichen einer ersten definierten Mindesttemperatur der Zustand des zweiten Ventilmittels an den Zustand des ersten Ventilmittels gekoppelt wird, insbesondere wenn sich beide Ventilmittel im selben Zustand befinden. Insbesondere ist dies von Vorteil, wenn eine Kopplung der beiden Zustände dann möglich ist, wenn beide Ventilmittel im Schließzustand sind. Die Kopplung kann durch ein thermosensitives Mittel vollzogen werden, insbesondere ein Bimetallelement oder ein Element aus einem Formgedächtnismaterial. Wenn beide Ventilmittel miteinander gekoppelt sind, bewirkt ein Überführen des einen Ventilmittels von dem Schließzustand in den Freigabezustand, dass auch das andere Ventilmittel von dem Schließzustand in den Freigabezustand überführt wird. Bei einer definierten ersten Mindesttemperatur kann somit erreicht werden, dass stets ein Öffnen des Ventildurchgangs erreicht wird, sobald ein Absinken der Umgebungstemperatur vorliegt.

Vorzugsweise ist dabei aber vorgesehen, dass bei Unterschreiten einer zweiten definierten Mindesttemperatur der Zustand des zweiten Ventilmittels von dem Zustand des ersten Ventilmittels entkoppelt wird. Insbesondere wenn auch grundsätzlich eine Beaufschlagung des zweiten Ventilmittels in dessen Schließzustand z.B. durch Rückstellmittel, vorgesehen ist, kann durch die temperaturabhängige Entkoppelung sichergestellt sein, dass ein Öffnen des Ventildurchgangs nur oberhalb der ersten und/oder zweiten definierten Mindesttemperatur vorgesehen ist bzw. dass unterhalb der ersten und/oder zweiten definierten Mindesttemperatur der Ventildurchgang geschlossen ist.

Vorzugsweise wird während des Anstiegs der Umgebungstemperatur Energie aus der Umgebung aufgenommen und gespeichert, wobei die gespeicherte Energie während eines Absinkens der Umgebungstemperatur in kinetische Energie umgewandelt und zum Öffnen des Ventildurchgangs verwendet wird. Hierdurch kann erreicht werden, dass trotz sinkender Temperatur, also sinkender Energiezufuhr, ein Öffnen des Ventildurchgangs ermöglicht ist, ohne dass definiert externe Energie eingebracht wird oder elektrochemische Energiespeichereinrichtungen, wie Batterien, erforderlich sind. Die Dosiervorrichtung kann damit im Wesentlichen wartungsfrei und vollkommen selbständig betrieben werden. Ein Eingriff von außen ist weitgehend nicht erforderlich, abgesehen von einem möglichen Nachfüllen oder Ersetzen der Reservoireinheit.

Eine Dosiervorrichtung, die insbesondere geeignet zur Verwendung in einem Wäschetrockner ist, wobei ein zu dosierendes Mittel aus der Dosiervorrichtung definiert in eine Umgebung der Dosiervorrichtung abgegeben werden kann, umfasst eine Reservoireinheit zur Aufnahme eines zu dosierenden Mittels, eine Ventileinheit zum definierten Öffnen und Schließen eines Ventildurchgangs von der Reservoireinheit in die Umgebung der Dosiervorrichtung, wobei die Ventileinheit zumindest ein erstes Ventilmittel umfasst, das zwischen einem Freigabezustand und einem Schließzustand überführbar ist, und eine Steuereinheit zur Steuerung der Ventileinheit, wobei die Steuereinheit zumindest einen thermosensitiven Aktuator umfasst, der ein Überführen des ersten Ventilmittels in Abhängigkeit eines Verlaufs der Umgebungstemperatur bewirken kann.

In der Dosiervorrichtung ist zwischen dem thermosensitiven Aktuator und dem ersten Ventilelement eine Reibkupplung angeordnet. Die Reibkupplung kann im Wesentlichen ein differenzierendes Übertragungsverhalten aufweisen. Anstelle der Reibkupplung kann auch ein anderes Übertragungselement mit einem im Wesentlichen differenzierendem Übertragungsverhalten angeordnet sein.

Unter einem thermosensitiven Aktuator ist im Rahmen der vorliegenden Erfindung insbesondere ein derartiger Aktuator gemeint, der in Abhängigkeit einer Temperatur, die in der Umgebung des Aktuators anliegt oder auf den Aktuator aufgebracht ist, eine bestimmte Stellgröße ausgibt. Ein solcher Aktuator kann beispielsweise ein Bimetallelement sein oder aus einem Formgedächtnismaterial hergestellt sein. Die Stellgröße ist dabei im Wesentlichen proportional zur anliegenden Temperatur. Durch die Zwischenschaltung der Reibkupplung oder des Übertragungselements mit einem im Wesentlichen differenzierenden Übertragungsverhalten kann eine auf das erste Ventilelement aufgebrachte Stellgröße von der absoluten Ausgangsgröße des Aktuators entkoppelt werden. Vielmehr wird lediglich die auf das Ventilelement aufgebrachte Stellgröße durch die Änderung der absoluten Ausgangsgröße des Aktuators bestimmt. Mit anderen Worten kann dies bedeuten, dass das Ventilelement in den einen Zustand beaufschlagt wird, wenn die Umgebungstemperatur ansteigt. Eine Beaufschlagung in Richtung des anderen Zustandes erfolgt, wenn die Umgebungstemperatur absinkt. Die absolute Temperatur kann dabei im Wesentlichen unberücksichtigt bleiben. Im Gegensatz dazu stehen Übertragungselemente mit einem im Wesentlichen linearen Übertragungsverhalten. Bei der Verwendung eines solchen Übertragungselements würde das Ventilmittel mit einer Stellgröße beaufschlagt werden, die im Wesentlichen proportional zur Ausgangsgröße des Aktuators und damit im Wesentlichen proportional zur Temperatur ist. Eine derart lineare Übertragung der Ausgangsgröße vom thermosensitivem Aktuator als Stellgröße auf ein Ventilmittel ist beispielsweise in der WO 2008/012613 A2 beschrieben.

Durch das Vorsehen der Reibkupplung oder des Übertragungselements mit einem im Wesentlichen differenzierenden Übertragungsverhalten kann der Zustand des ersten Ventilmittels im Wesentlichen von der absoluten Temperatur der Umgebung entkoppelt werden und an ein Absinken oder ein Ansteigen der Temperatur gekoppelt werden. Hierdurch ist es grundsätzlich möglich, ein Öffnen oder Schließen des Ventildurchgangs auch oder nur in Abhängigkeit der Änderung der Temperatur zu bringen. Durch das Vorsehen von anderen Aktuatoren bzw. Ventilmitteln kann aber dennoch eine zusätzliche Abhängigkeit von der absoluten Temperatur möglich bleiben.

Das Übertragungselement mit einem im Wesentlichen differenzierenden Übertragungsverhalten kann auch als schlupfbehaftetes Element ausgebildet sein. Insbesondere die Reibkupplung kann dabei durch den thermosensitiven Aktuator beaufschlagt werden, solange sich dessen Ausgangsgröße verändert. Wenn das erste Ventilmittel dabei bereits denjenigen Zustand erreicht hat, in den es durch die Reibkupplung beaufschlagt wird, erfolgt zwar weiterhin eine Beaufschlagung in diesen Zustand hinein. Die Beaufschlagung führt aber nicht zu einer Aufsummierung der beaufschlagenden Kräfte oder ein Aufintegrieren von Spannungen, bedingt durch eine weitere Veränderung der Ausgangsgröße des Aktuators, da die Reibkupplung dann durchdreht, ohne das Ventilmittel weiter zu überführen. Sollte anschließend die Temperatur wieder sinken, kann das erste Ventilmittel im Wesentlichen unmittelbar wieder in Richtung des anderen Zustandes beaufschlagt werden, ohne dass dafür zunächst ein Abbauen von aufsummierten oder aufintegrierten Spannungen erforderlich ist. Dies trifft natürlich auch auf den umgekehrten Fall zu, dass zunächst ein Temperaturabsinken vorgesehen ist, gefolgt von einem Temperaturanstieg. Dabei ist dann im Rahmen der vorliegenden Erfindung zu berücksichtigen, dass thermosensitive Aktuatoren in der Regel mit einer gewissen Verzögerung auf Temperaturänderungen ansprechen. Dies hat aber den Vorteil, dass geringe Schwankungen der Temperatur nicht unmittelbar zu einem Überführen von Ventilmitteln in den jeweilig anderen Zustand führen. Temperaturschwankungen können somit vernachlässigbar sein. Die bezüglich der Reibkupplung genannten Vorteile können sich auch für andere Übertragungselemente mit einem im Wesentlichen differenzierenden Übertragungsverhalten ergeben.

Vorzugsweise weist die Ventileinheit ein zweites Ventilmittel auf, das zwischen einem Freigabezustand und einem Schließzustand überführbar ist. Das zweite Ventilmittel kann zumindest teilweise unabhängig vom ersten Ventilmittel sein. Die Steuerung des zweiten Ventilmittels kann dabei in Abhängigkeit anderer Größen, insbesondere auch der absoluten Temperatur gebracht sein. Durch das Vorsehen des zweiten Ventilmittels, das auch in Reihe mit dem ersten Ventilmittel oder in sonstiger Wirkverbindung mit dem ersten Ventilmittel stehen kann, kann ein komplexes Steuerverfahren implementiert sein. Eine Reihenschaltung der Ventilmittel kann sich dann ergeben, wenn der Ventildurchgang geöffnet ist, wenn beide Ventilmittel in deren Freigabezustand sind und wenn der Ventildurchgang geschlossen ist, wenn zumindest eines der Ventilmittel im Schließzustand ist. Ein Ventilmittel kann grundsätzlich durch einen verstellbaren strömungsunterbrechenden Gegenstand dargestellt sein, insbesondere eine Scheibe oder ein Gegenstand, der örtlich verlagerbar sein kann. Das Ventilmittel weist eine Öffnung oder einen Durchbruch auf, der einen Teil des Ventildurchgangs darstellen kann. Die Öffnung kann in Überlagerung mit einer anderen Öffnung, insbesondere einer feststehenden Öffnung oder der Öffnung eines anderen Ventilmittels gebracht werden. Dann sind die jeweiligen Öffnungen miteinander in Überdeckung, so dass die durch die Öffnung gebildeten Teile des Ventildurchgangs geöffnet sind. Eine Scheibe als Ventilmittel kann grundsätzlich drehend oder lateral verlagerbar sein.

Vorzugsweise weist die Steuereinheit eine erste Energiespeichereinheit auf, die zumindest eines der Ventilmittel in zumindest einen der Zustände, insbesondere den Freigabezustand, beaufschlagen kann. Eine solche Energiespeichereinheit kann durch einen thermosensitiven Aktuator gebildet sein, der während eines Temperaturanstiegs eine Formänderung vollzieht und dadurch quasi aufgeladen wird. Bei einem Absinken der Temperatur entstehen elastische Spannungen, die den Aktuator in die jeweils andere Richtung beaufschlagen. Hierdurch wird thermische Energie in potentielle Energie und anschließend in kinetische Energie umgewandelt. Alternativ oder in Kombination dazu kann auch eine Energiespeichereinheit in Form einer Rückstellfeder vorgesehen sein. Die Rückstellfeder kann durch die Aktivität eines Aktuators unter Spannung gesetzt werden. Bei Nachlassen der Aktuatortätigkeit kann die Rückstellfeder zumindest eines der Ventilmittel in einen anderen Zustand beaufschlagen. Dabei ist vorzugsweise vorgesehen, dass die Rückstellfeder schwächer dimensioniert ist als ein Aktuatorelement, welches der Rückstellfeder entgegenwirken kann.

Gemäß einer ersten Ausführungsform der Dosiervorrichtung umfasst die Steuereinrichtung einen zweiten thermosensitiven Aktuator, der in Abhängigkeit einer Umgebungstemperatur das erste Ventilmittel zumindest mittelbar mit demjenigen Aktuator koppeln kann, der das erste Ventilelement in den Freigabezustand beaufschlagen kann. Hierdurch kann eine Beaufschlagung auch des zweiten Ventilelements zumindest teilweise in Abhängigkeit mit der Änderung der Temperatur gebracht werden. Ferner kann eine Kopplung zwischen erstem Ventilmittel und zweitem Ventilmittel ermöglicht werden. Die Kopplung durch den zweiten thermosensitiven Aktuator mit dem anderen Aktuator findet aber nur dann statt, wenn sich die Umgebungstemperatur in einem definierten Temperaturbereich befindet. Der zweite thermosensitive Aktuator ist vorzugsweise dann aktiv, d. h. er koppelt, wenn die Umgebungstemperatur höher als eine erste definierte Mindesttemperatur ist. Vorzugsweise kann der zweite thermosensitive Aktuator das erste Ventilelement synchron mit dem zweiten Ventilmittel koppeln.

Eine weiterentwickelte zweite Ausführungsform der Dosiervorrichtung sieht hingegen vor, die Steuereinrichtung mit nur einem einzigen thermosensitiven Aktuator zu versehen. Dabei ist der eine thermosensitive Aktuator ggf. über Zwischenelemente an beide Ventilmittel gekoppelt und kann auf diesem Wege die Stellung beider Ventilmittel beeinflussen. Insofern ergibt sich durch die Verwendung nur eines thermosensitiven Aktuators eine konstruktive Vereinfachung.

Vorzugsweise weist die Steuereinheit ausschließlich mechanische Steuerkomponenten auf. Unter mechanischen Steuerkomponenten sind auch thermomechanische Komponenten umfasst. Hierdurch kann die Vorrichtung besonders wartungsfrei und einfach gestaltet sein. Eine Zufuhr von elektrischer Energie oder die Bereitstellung anderer Energiespeichermittel kann entfallen.

Vorzugsweise ist die Reservoireinheit abnehmbar an der Dosiervorrichtung gehalten. Hierdurch kann ein leichtes Nachfüllen erreicht werden. Vorzugsweise kann die Reservoireinheit mit einem abnehmbaren Deckel- oder Bodenteil verbunden sein.

Die genannten Mindesttemperaturen beziehen sich stets auf die Umgebungstemperatur. Die genannten ersten und zweiten Mindesttemperaturen sind nicht zwangsläufig identisch zueinander, können dies aber sein. So können auch im Hinblick auf identische Bauteile die genannten Mindesttemperaturen unterschiedlich zueinander sein, insbesondere bedingt durch gewisse Trägheiten in der Reaktion auf Änderungen der Temperatur oder durch Hystereseverhalten. Eine bevorzugte Mindesttemperatur liegt bei 40°C, vorzugsweise bei 45°C. Ferner liegt eine der Mindesttemperaturen zumindest 20°C, vorzugsweise zumindest 40°C unterhalb einer Betriebstemperatur des jeweiligen Vorganges (z.B. Waschvorgang, Trockenvorgang). Vorzugsweise ist die erste Mindesttemperatur nicht niedriger als die zweite Mindesttemperatur.

Unter "Überführen" in einen Zustand wird im Rahmen der Erfindung ein Ändern des Zustandes von einem Ausgangszustand (z.B. Freigabezustand oder Schließzustand) in einen Zielzustand (z.B. Schließzustand oder Freigabezustand) verstanden. Sollte bereits vor dem Überführen der Zielzustand vorhanden sein, wird unter "Überführen" auch das Beibehalten des Zielzustands verstanden.

Ein "Beaufschlagen" in einen Zustand kann im Rahmen der Erfindung zwar ein "Überführen" in den Zustand bewirken, muss es aber insbesondere dann nicht, wenn durch andere Beaufschlagungen oder Zwangskräfte das jeweilige Ventilmittel o.ä. an einem Überführen gehindert wird.

Die Erfindung wird anhand der Figuren nachfolgend näher erläutert. Hierin zeigt
- Fig. 1: eine erfindungsgemäße erste Ausführung der Dosiervorrichtung in perspektivischer Darstellung;
- Fig. 2: die erste Ausführung Dosiervorrichtung nach Figur 1 in Explosionsdarstellung mit Ansicht der Komponenten
a) in Draufsicht,
b) in Seitenansicht, teilweise geschnitten;
- Fig. 3: Ventilmittel der Dosiervorrichtung nach Figur 1 in unterschiedlichen Betriebszuständen in Draufsicht;
- Fig. 4: den Temperaturverlauf eines Vorgangs bei einer bestimmungsgemäßen Verwendung der Dosiervorrichtung nach Figur 1.
- Fig. 5: eine zweite Ausführung Dosiervorrichtung in Explosionsdarstellung mit Ansicht der Komponenten
a) in Draufsicht,
b) in Seitenansicht, teilweise geschnitten;
- Fig. 6: mit mehreren temperaturabhängigen Einzelabbildungen a)-g) in Prinzipdarstellung die Funktionsweise der Dosiervorrichtung aus Figur 4.

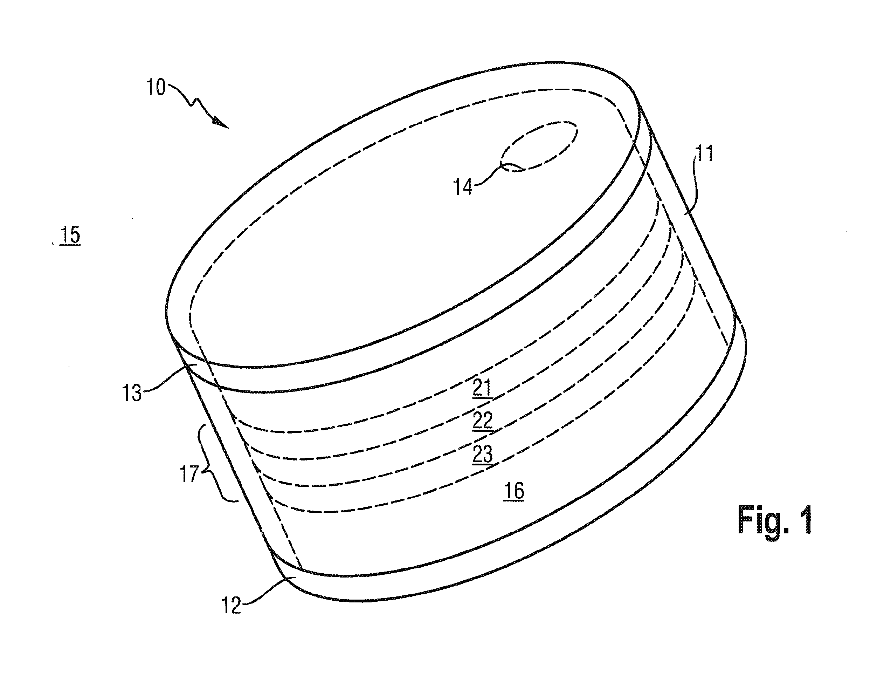

Figur 1 zeigt schematisch eine Dosiervorrichtung 10 in zusammengesetztem Zustand. Die Dosiervorrichtung 10 umfasst ein im Wesentlichen zylindrisches Gehäuse 11, welches durch ein Bodenteil 12 und ein Deckelteil 13 abgeschlossen ist. Das Deckelteil 13 weist eine oder mehrere Öffnungen 14 auf, durch die ein Innenraum der Dosiervorrichtung 10 mit der Umgebung 15 fluidisch verbunden ist. Innerhalb des zylindrischen Gehäuses 11 ist ein Schwamm 16 angeordnet, der ein zu dosierendes Mittel aufnimmt. Der Schwamm 16 ist fest mit dem Bodenteil 12 verbunden. Das Bodenteil 12 ist auf das zylindrische Gehäuse 11 angeschraubt und kann mitsamt dem Schwamm 16 zu Nachfüllzwecken abmontiert werden. Das zu dosierende Mittel ist beispielsweise ein in flüssiger Form vorhandener Duftstoff, der im Schwamm 16 aufgenommen ist und durch Diffusion durch eine nicht dargestellte Membran in Gasform durch die Öffnung 14 in die Umgebung 15 treten kann. Der Schwamm 16 stellt dabei eine Reservoireinheit dar.

Die Dosiervorrichtung 10 umfasst ferner mehrere Scheiben 21, 22, 23, die eine Ventileinheit 17 darstellen. Die Ventileinheit 17 definiert einen Ventildurchgang. Wenn der Ventildurchgang geöffnet ist, kann zu dosierendes Mittel vom Schwamm 16 in die Umgebung 15 austreten. Wenn der Ventildurchgang geschlossen ist, kann kein zu dosierendes Mittel vom Schwamm 16 in die Umgebung 15 austreten. Der Ventildurchgang wird durch Öffnungen 26, 29, 34 der Scheiben 21, 22, 23 gebildet.

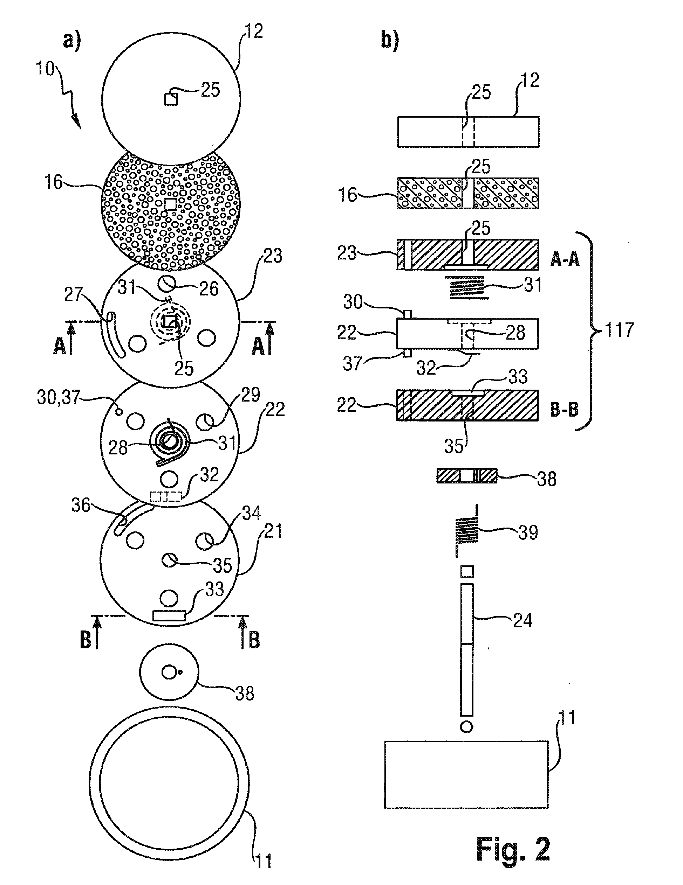

Der Aufbau der Dosiervorrichtung 10 wird nachfolgend anhand der Figur 2 erläutert. Zu erkennen ist das zylindrische Gehäuse 11 sowie das Bodenteil 12, welche bereits bezüglich Fig. 1 beschrieben wurden. Ferner ist der Schwamm 16 gezeigt, der eine im Wesentlichen zylindrische Form aufweist, mit dem Bodenteil 12 in Anlage ist und durch das zylindrische Gehäuse 11 in Umfangsrichtung umrahmt wird. Die Ventileinheit 17 umfasst im Wesentlichen die drei Scheiben 21, 22, 23, die in der vorliegenden Ausgestaltung kreisförmig ausgebildet sind und drehbar verlagerbar sind. Die dritte Scheibe 23 grenzt an den Schwamm 16 an. Die dritte Scheibe 23, der Schwamm 16 und das Bodenteil 12 weisen jeweils eine zentrale Ausnehmung 25 mit einem eckigen Querschnitt auf. Durch einen Achszapfen 24, der ebenfalls einen eckigen Querschnitt aufweist, der im Wesentlichen dem eckigen Querschnitt der Ausnehmungen 25 entspricht, werden der Schwamm 16 und insbesondere die dritte Scheibe 23 drehfest zum Bodenteil 12 gehalten. Das Bodenteil 12 ist wiederum mit dem zylindrischen Gehäuse 11 drehfest verbunden. Insofern ist die dritte Scheibe 23 und der Schwamm 16 drehfest innerhalb der Dosiervorrichtung 10 gehalten. Die dritte Scheibe 23 weist ferner drei umfangsverteilte Öffnungen 26 auf, die Teile des Ventildurchgangs sind. Durch die Öffnungen 26 kann zu dosierendes Mittel durch die dritte Scheibe 23 gelangen. Ferner weist die dritte Scheibe 23 ein Langloch 27 auf, welches sich in Umfangsrichtung erstreckt und zur Führung eines Stiftes 30 dient, der an der noch zu erläuternden zweiten Scheibe 22 angebracht ist.

Die zweite Scheibe 22 weist eine zentrale Ausnehmung 28 mit rundem Querschnitt auf. Insofern ist die zweite Scheibe 22 drehbar gegenüber dem Bodenteil 12 gehalten. Ferner weist die zweite Scheibe 22 drei umfangsverteilte Öffnungen 29 auf, die ihrerseits einen Teil des Ventildurchgangs darstellen und durch die zu dosierendes Mittel durch die zweite Scheibe 22 durchtreten kann. Ein Stift 30 ist vorgesehen, der außermittig von der zweiten Scheibe 22 in Richtung zur dritten Scheibe 23 hervorsteht und durch das Langloch 27 der dritten Scheibe 23 hindurchragt. Der Stift 30 sowie das Langloch 27 begrenzen eine Relativverdrehung der zweiten Scheibe 22 gegenüber der dritten Scheibe 23. Ferner ist eine im Wesentlichen temperaturunabhängige Spiralfeder 31 vorgesehen, die sich sowohl an der zweiten Scheibe 22 als auch an der dritten Scheibe 23 abstützt. An der zweiten Scheibe 22 ist ferner ein Bimetallstreifen 32 angebracht. Der Bimetallstreifen 32 ist an der der dritten Scheibe 23 abgewandten Seite der zweiten Scheibe 22 angeordnet, die der noch zu erläuternden ersten Scheibe 21 zugewandt ist.

Die erste Scheibe 21 weist drei umfangsverteilte Öffnungen 34 auf, die Teil des Ventildurchgangs sind und durch die zu dosierendes Mittel durchtreten kann. Durch eine zentrale Ausnehmung 35 mit rundem Querschnitt ist die erste Scheibe 21 drehbar gelagert. Die erste Scheibe 21 weist ein Langloch 36 auf, welches sich in Umfangsrichtung an der ersten Scheibe 21 erstreckt. In das Langloch 36 greift ein Stift 37 ein, der an einer der ersten Scheibe 21 zugewandten Seite der zweiten Scheibe 22 angeordnet ist. Durch das Zusammenwirken des Langlochs 36 mit dem Stift 37 wird die Relativbewegung der ersten Scheibe 21 relativ zur zweiten Scheibe 22 begrenzt.

Der Bimetallstreifen 32 kann oberhalb einer ersten definierten Mindesttemperatur ausrücken und dann von der Oberfläche der zweiten Scheibe 22 abstehen. Dabei kann er in eine Rastnut 33 der ersten Scheibe 21 eingreifen und damit die zweite Scheibe 22 mit der ersten Scheibe 21 koppeln, zumindest dann, wenn der Bimetallstreifen 32 in Überdeckung mit der Rastnut 33 der ersten Scheibe 21 ist. Dies ist dann der Fall, wenn sich die erste Scheibe 21 gegenüber der zweiten Scheibe 22 jeweils in einer definierten Stellung befindet, bei der die Öffnungen 29, 34 der zweiten und ersten Scheibe in axialer Überdeckung sind.

An einer der zweiten Scheibe 22 abgewandten Seite der ersten Scheibe 21 ist eine Reibscheibe 38 vorgesehen, die mit einer Bimetallspiralfeder 39 zusammenwirkt. Die Reibscheibe 38 ist reibbehaftet mit der ersten Scheibe 21 verbunden und bildet so mit der ersten Scheibe 21 eine Reibkupplung. Eine Drehung kann der Reibscheibe 38 kann daher eine Drehung der ersten Scheibe 21 bewirken. Die Bimetallspiralfeder 39 stützt sich dabei sowohl an der Reibscheibe 38 als auch an dem nicht dargestellten Deckelteil 13 ab, welches drehfest mit dem zylindrischen Gehäuse 11 verbunden ist. Insofern kann mittels der Bimetallspiralfeder 39 eine Drehung der Reibscheibe 38 veranlasst werden, wenn sich die Bimetallspiralfeder 39 temperaturbedingt ausdehnt oder zusammenzieht. Die Bimetallspiralfeder 39 kann grundsätzlich auch durch ein Element aus einem Formgedächtnismaterial ersetzt sein.

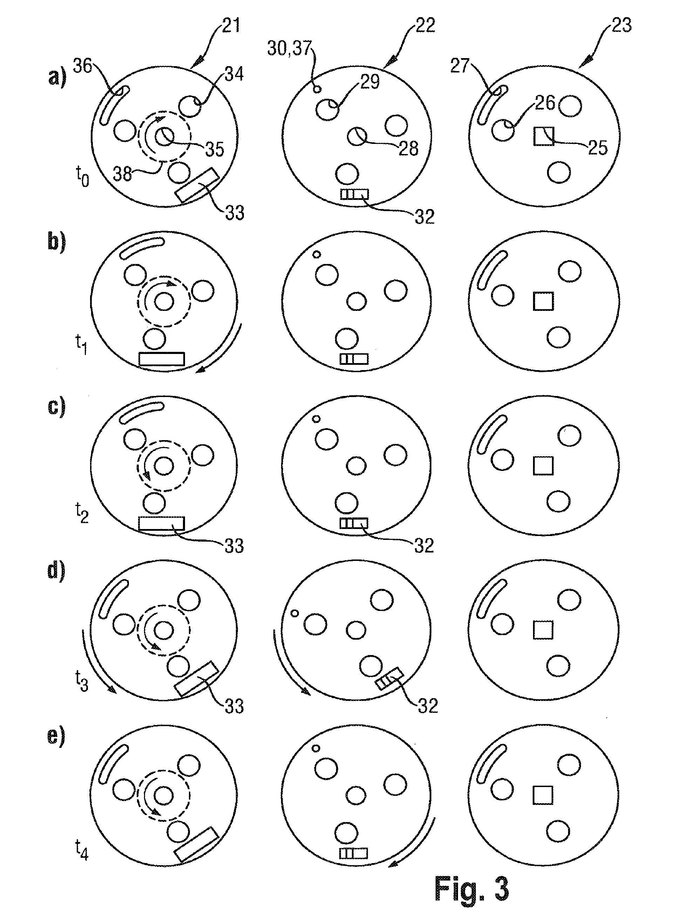

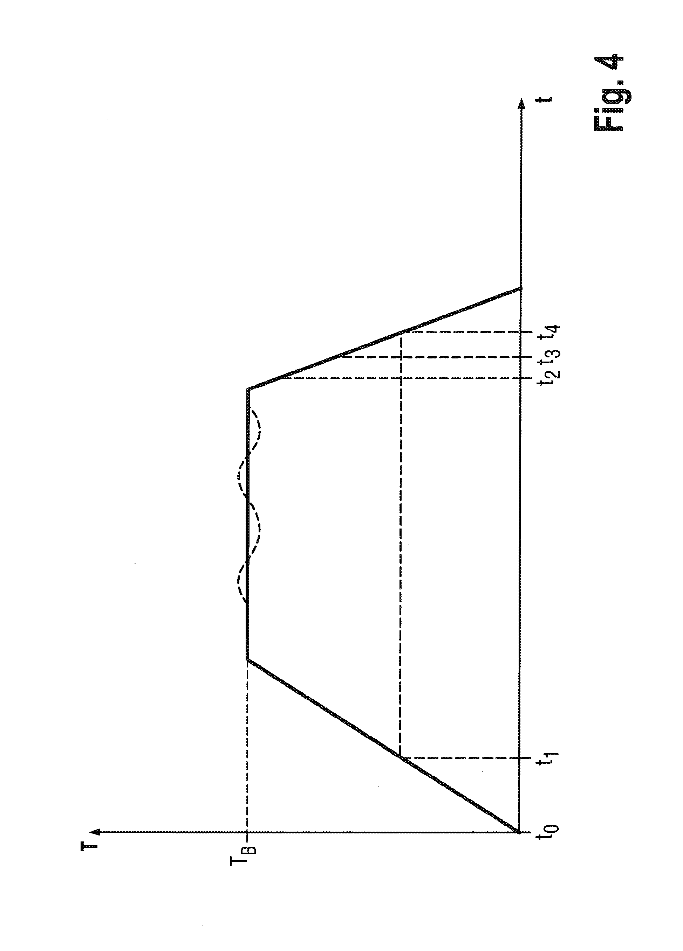

Die Funktionsweise der Dosiervorrichtung 10 wird anhand der Figuren 3 und 4 näher erläutert. In der Figur 3 sind in den unterschiedlichen Darstellungen a bis e die drei Scheiben 21, 22, 23 jeweils in unterschiedlichen Stellungen dargestellt,. In der ersten Spalte ist die erste Scheibe 21 in unterschiedlichen Stellungen dargestellt. In der zweiten Spalte ist die zweite Scheibe 22 in unterschiedlichen Stellungen dargestellt. In der dritten Spalte ist die dritte Scheibe 23 dargestellt. Da die dritte Scheibe 23 drehfest innerhalb der Dosiervorrichtung 10 gehalten ist, ist die dritte Scheibe 23 auch stets in der selben Stellung in Figur 3 gezeigt. In der ersten Spalte ist innerhalb der ersten Scheibe 21 zusätzlich die Reibscheibe 38 gestrichelt dargestellt, die in Draufsicht durch die erste Scheibe 21 verdeckt ist. Der innerhalb der gestrichelt dargestellten Reibscheibe 38 dargestellte Pfeil verdeutlicht die Drehrichtung der Reibscheibe 38, die durch die Bimetallspiralfeder 39 bei einem Temperaturanstieg oder bei einem Absinken der Temperatur erzeugt wird. Ferner sind jeweils die unterschiedlichen Öffnungen 34, 29, 26 der drei Scheiben zu erkennen, die jeweils Teil des Ventildurchgangs sind. Wenn diese drei Öffnungen übereinander liegen, ist der Ventildurchgang geöffnet. Wenn die Öffnungen zumindest einer der Scheiben nicht in Überdeckung mit den Öffnungen einer anderen Scheibe sind, ist der Ventildurchgang geschlossen.

In Figur 3d befinden sich die erste Scheibe 21 und die zweite Scheibe 22 jeweils in einer Freigabestellung. Dies ist daran zu erkennen, dass die Öffnungen 34, 29 der ersten und zweiten Scheiben mit den Öffnungen 26 der dritten Scheibe in Überdeckung sind. Die Freigabestellungen sind in dieser Darstellung daran zu erkennen, dass sich die Rastnut 33 sowie der Bimetallstreifen 32 in einer etwa 5-Uhrposition befinden. Somit ist der Ventildurchgang geöffnet.

In den Figuren 3b und 3c hingegen befinden sich die erste Scheibe 21 und die zweite Scheibe 22 in deren Schließstellung. Dabei sind Öffnungen 34, 29 der ersten Scheibe 21 und der zweiten Schreibe 22 nicht Überdeckung mit den Öffnungen 26 der dritten Scheibe. Die Schließstellungen sind in dieser Darstellung daran zu erkennen, dass sich die Rastnut 33 sowie der Bimetallstreifen 32 in einer etwa 6-Uhrposition befinden. Somit ist der Ventildurchgang geschlossen.

In der Figur 3a ist zwar die erste Scheibe 21 in deren Freigabestellung. Da aber die zweite Scheibe 22 in ihrer Schließstellung ist, ist der Ventildurchgang dennoch geschlossen. Gleiches trifft auch auf die Stellung gemäß Figur 3e zu.

Im Folgenden wird ein typischer Zyklus eines Wäschetrockners dargestellt, in dem die Dosiervorrichtung zur Anwendung kommen kann. Dies wird anhand der Figur 3 dargestellt, in der die unterschiedlichen Stellungen der Scheiben zu erkennen sind, sowie durch die Figur 4, die die Temperatur T während der Dauer des Trockenvorgangs über der Zeit t darstellt. Figur 3a stellt die Ventilstellung im Wesentlichen zum Ausgangszeitpunkt t₀ des Trockenvorgangs dar. Die Temperatur im Wäschetrockner entspricht im Wesentlichen der Umgebungstemperatur des Wäschetrockners, üblich bei in etwa 20°C. Bei einer Erhöhung der Temperatur im Wäschetrockner fängt die Bimetallspiralfeder 39 an, sich auszudehnen, was zu einer Verdrehung der Bimetallspiralfeder 39 führt. Dadurch wird die Reibscheibe 38 angetrieben und zwar im Uhrzeigersinn, wie in Figur 3a durch den Pfeil zu erkennen ist. Die erste Scheibe 21 ist dabei noch in ihrer Ausgangsstellung, nämlich in der Freigabestellung. Da aber die zweite Scheibe 22 in der Schließstellung ist, ist der Ventildurchgang geschlossen.

Zum Zeitpunkt t₁ hat die Reibscheibe 38 einen gewissen Winkelweg zurück gelegt, angetrieben durch die Bimetallfeder 39, so dass durch die Reibverbindung zwischen der Reibscheibe 38 und der ersten Scheibe 21 die erste Scheibe 21 im Uhrzeigersinn gedreht wurde und zwar in deren Schließstellung wie in Figur 3b zu erkennen ist. Bei einer weiteren Erhöhung der Temperatur treibt zwar die Bimetallspiralfeder 39 die Reibscheibe 38 weiterhin an. Ein weiteres Verdrehen der ersten Scheibe 21 durch die Reibscheibe 38 ist aber nicht möglich, da die erste Scheibe 21 durch den Stift 37 der zweiten Scheibe 22, der im Langloch 36 der ersten Scheibe 2 gehalten ist, an einem weiteren Verdrehen gegenüber dem der zweiten Scheibe 22 gehindert wird. Die zweite Scheibe 22 kann dabei nicht weiter verdreht werden, da diese durch den Stift 30 der zweiten Scheibe 22 innerhalb des Langlochs 27 der dritten Scheibe 23 an einem Verdrehen in Richtung des Uhrzeigersinns gehindert wird. Insofern stellen die Schließstellungen der ersten Scheibe 21 und der zweiten Scheibe 22 Endstellungen dar, über die die jeweiligen Scheiben 21, 22 nicht hinaus bewegt werden können.

In etwa zum Zeitpunkt t₁ wird eine erste definierte Mindesttemperatur erreicht, die ein Ausrücken des Bimetallstreifens 32 derart bedingt, dass der Bimetallstreifen 32 in Richtung zur ersten Scheibe 21 hervorsteht und in die Rastausnehmung der ersten Scheibe 21 hineinragt. Der ausgerückte Bimetallstreifen ist in Figur 2b durch volle Linien dargestellt, während die gestrichtelten Linien den eingerückten Bimetallstreifen 32 darstellen. Da zum Zeitpunkt t₁ sowohl die erste Scheibe 21 als auch die zweite Scheibe 22 in deren Schließstellungen sind und die Rastnut 33 in Überdeckung zum Bimetallstreifen 32 ist, werden die erste Scheibe 21 und die zweite Scheibe 22 miteinander gekoppelt. Die Stellungen, die in Figur 3b dargestellt sind, stellen die Ventilstellung zum Zeitpunkt t₁ dar, welche nun über den nachfolgenden Trockenvorgang verbleiben, bei dem die Temperatur ihre Betriebstemperatur T_{B} erreicht. Diverse Schwankungen in der Temperatur T, die durch gestrichelte Linien in Figur 4 dargestellt sind, ändern an den Stellungen der Scheiben 21, 22 nichts, da die Bimetallelemente 39, 32 mit einer gewissen Trägheit versehen sind.

Zum Zeitpunkt t₂ sinkt die Temperatur T innerhalb des Wäschetrockners ab. Es ist in Figur 3c zu erkennen, dass die Reibscheibe 38 sich nun im Gegenuhrzeigersinn dreht, was durch ein Abkühlen der Bimetallfeder und damit durch ein Zusammenziehen der Bimetallfeder 39 bedingt ist. Nach wie vor sind aber die erste Scheibe 21 und die zweite Scheibe 22 miteinander durch den Bitmetallstreifen 32 gekoppelt. Zum Zeitpunkt t₃ (Figur 3d) hat die Reibscheibe 38 die erste Scheibe 21 aus deren Schließstellung in deren Freigabestellung überführt. Durch die Kopplung der ersten Scheibe 21 mit der zweiten Scheiben 22 durch den Bimetallstreifen 32 wird zugleich auch die zweite Scheibe 22 von deren Schließstellung in deren Freigabestellung überführt. Nun ist der Ventildurchgang geöffnet. Zu dosierendes Mittel kann von dem Schwamm 16 durch den Ventildurchgang in die Umgebung der Dosiervorrichtung, nämlich in den Innenraum des Wäschetrockners gelangen.

In Figur 3e ist die Stellung der Scheiben 21, 22 bei weiterer Abkühlung zum Zeitpunkt t₄ gezeigt. Das Absinken der Temperatur bewirkt, dass der Bimetallstreifen 32 wieder einrückt, wodurch die Kopplung zwischen der ersten Scheibe 21 und der zweiten Scheibe 22 gelöst wird. Da die zweite Scheibe 22 durch die Rückstellfeder 31 grundsätzlich in deren Schließstellung beaufschlagt wird, wird die zweite Scheibe 22 nun in die Schließstellung überführt. Damit wird der Ventildurchgang wieder geschlossen.

Die Stellungen der Scheiben gemäß Figur 3e zum Zeitpunkt t₄ entspricht exakt den Stellungen der Scheiben gemäß Figur 3a zum Zeitpunkt t₀. Insofern ist zum Zeitpunkt t₄ die Dosiervorrichtung wieder in ihrer Ausgangsstellung angelangt. Ein erneuter Trockenvorgang kann gestartet werden, ohne dass durch eine externe Betätigung, beispielsweise Drücken eines Reset-Knopfes, die Vorrichtung wieder in ihren Ausgangszustand überführt werden muss. Zwar ist in den Zeitpunkten t₄ und t₁ die Mindesttemperatur T jeweils in etwa gleich eingetragen. Es kann sich jedoch auch ergeben, dass das Ausrücken zum Zeitpunkt t₄ erst bei einer niederen Temperatur erfolgt, als das Einrücken zum Zeitpunkt t₁, z.B. bedingt durch ein gewisses Hystereseverhalten des Bimetallstreifens.

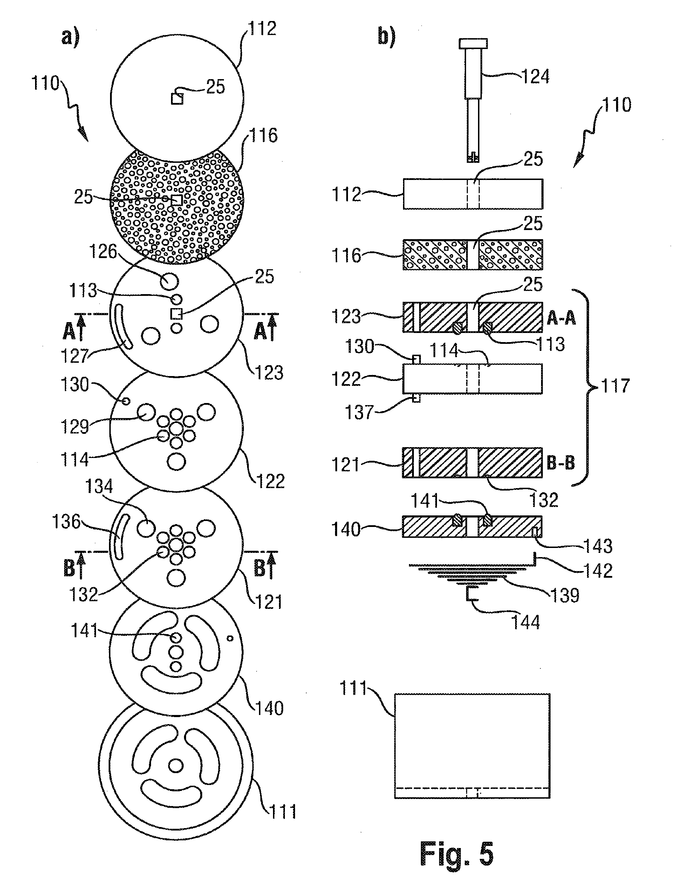

Anhand der Figuren 5-6 wird im konstruktiven Aufbau wie auch in der Funktion eine zweite Ausführungsform der Dosiervorrichtung 110 beschrieben. Grundsätzlich hat die zweite Variante der Dosiervorrichtung 110 gegenüber der ersten Ausführung der Dosiervorrichtung 10 nach den Figuren 1-3 einen vergleichbaren Grundaufbau, weist jedoch im Unterschied dazu lediglich ein einziges thermosensitives Element 139 auf. Die zweite Dosiervorrichtung 110 umfasst im Einzelnen vorzugsweise aus Kunststoff bestehenden Scheiben 112, 121, 122, 123 und 140, welche auf dem Achszapfen bzw. der Welle 124 angeordnet sind. Hierbei bildet die Scheibe 112 als Bodenteil 112 zusammen mit einer zylindrischen Hülse 111 das Gehäuse der Dosiervorrichtung 110, welches die sonstigen Elemente der Dosiervorrichtung 110 umgibt. Die Scheiben 123 und 112 sind hierbei auf der Welle bzw. dem Achszapfen 124 z.B. durch einen Formschluß verdrehsicher fixiert, während die übrigen Scheiben 121, 122 und 140 drehbar auf der Welle 124 angeordnet sind. Dabei bilden die Scheiben 121, 122, 123 die Ventileinheit 117, die die temperaturabhängige Produktabgabe der Dosiervorrichtung 110 steuert. Zwischen dem Bodenteil 112 und der dritten Scheibe 123 ist analog zur ersten Dosiervorrichtungsvariante 10 ist ein im Wesentlichen scheibenförmiges Schwammelement 116 angeordnet, welches einem zu dosierenden Mittel, insbesondere mit Duftmittel, getränkt werden kann. Das Bodenteil 112 und die dritte Scheibe 123 schließen jeweils am Umfang mit dem zylindrischen Gehäuseteil 111 ab, so dass Duftmittel nur durch die jeweiligen Öffnungen 126, 129, 134 in den drei Ventilscheiben 121, 122, 123 austreten kann. Die zweite Ventilscheibe 122 weist dabei beidseitig Stifte 130, 137 auf, welche mit korrespondierenden Langlöchern 127, 136 in der ersten 121 und dritten Scheibe 123 analog zum bereits Beschriebenen zusammenwirken. Dadurch wird eine formschlüssige Verbindung zwischen den Scheiben 121, 122, 123 hergestellt, die die Rotationsbewegung der einzelnen Scheiben untereinander auf definierte Drehwinkel entsprechend den Langlochabmessungen beschränkt. Zudem existiert in Achsrichtung der Welle 124 eine kraftschlüssige Verbindung zwischen den drei Scheiben 121-123 der Ventileinheit 117. Im Einzelnen sind hierzu an der dritten Scheibe 123 axial vorgespannten Kugeldruckstücke 113 vorgesehen, welche in zugehörige Rastvertiefungen 114 der zweiten Scheibe 122 eingreifen. Darüber hinaus sind an einer vierten Scheibe 140 weitere axial vorgespannte Kugeldruckstücke 141 vorgesehen, welche in zugehörige Rastvertiefungen 132 der ersten Scheibe 121 eingreifen. Die Kugeldruckstücke 113, 141 bewirken grundsätzlich eine rotatorische Kopplung der einzelnen Scheiben 121, 122, 123, 140 im Rahmen der durch die Langlöcher 127, 136 begrenzten Rotationsmöglichkeiten. Hierbei sind die Kugeldruckstücke 141 der vierten Scheibe 140 mit einer höheren axialen Federvorspannung belegt als die Kugeldruckstücke 113 der dritten Scheibe 123. An der vierten Endscheibe 140 ist schließlich auch das in Gestalt einer Thermobimetallspiralfeder 139 das thermosensitive Element mit einem Ende fixiert. Hierbei greift die Thermobimetallspiralfeder 139 mit einem ersten Ende 142 formschlüssig in eine Vertiefung 143 der vierten Scheibe 140 ein. Mit ihrem zweiten Ende 144 greift die Thermobimetallfeder 139 formschlüssig in die Welle 124 ein. Bei Temperaturänderung in der Umgebung der Dosiervorrichtung 110 verdreht so die Thermobimetallspiralfeder 139 die vierte Scheibe 140 gegen die Welle 124. Bei schraubenförmiger Ausprägung der Thermobimetallspiralfeder 139 kann zusätzlich erreicht werden, dass die einzelnen Scheiben 112, 121, 122, 123, 140 zur Erhöhung der Dichtigkeit axial leicht gegeneinander gedrückt werden.

Grundsätzlich ist die gesamte Scheibenanordnung 112, 121-123, 140 innerhalb einer zylindrischen Gehäusehülse 111 untergebracht. Ein zusätzlicher Schutz der Scheibenanordnung 112, 121-123, 140 vor Umgebungsbedingungen, insbesondere innerhalb eines Wäschetrockners wird durch eine Einbettung der Gehäusehülse in eine nicht gezeigte elastische Hülle, beispielsweise einen elastischen Ball erreicht. Dadurch werden u. a. unerwünschte Stöße auf die Dosiervorrichtung 110 abgedämpft.

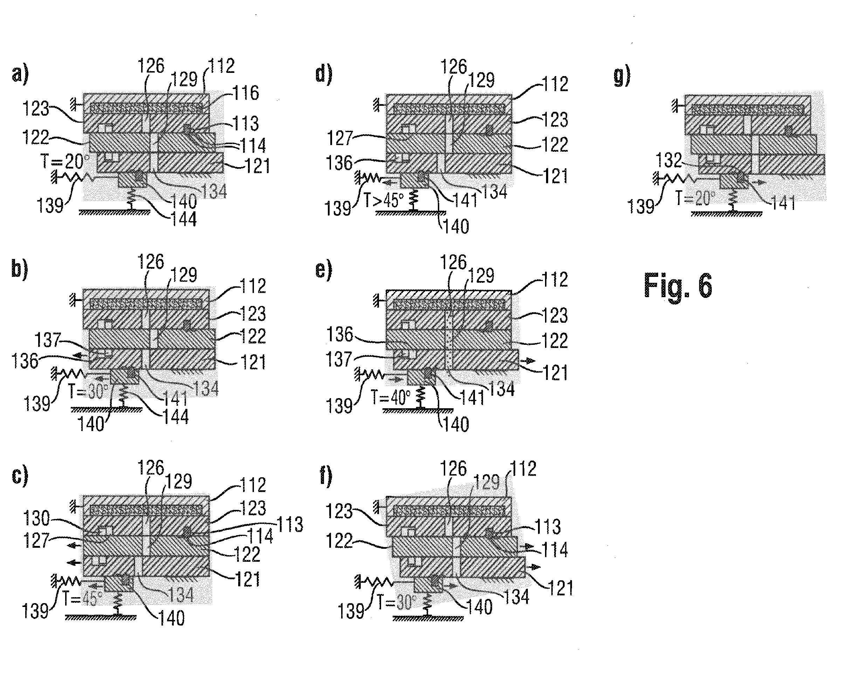

Anhand der Prinzipdarstellung in Figur 6a)-g) wird nun Funktionsweise der Dosiervorrichtung 110 schematisch verdeutlicht. Dabei ist in den einzelnen Abbildungen 6a)-g) das Scheibenpaket 112, 116, 121, 122, 123, 140 der Dosiervorrichtung 110 bei unterschiedlichen Temperaturzuständen abgebildet. Dabei wird das Scheibenpaket 112, 116, 121, 122, 123, 140 mittels einer axialen Druckfeder 144, die an der vierten Scheibe 140 angreift, zusammen gedrückt. Weiterhin greift an der vierten Scheibe 140 in bereits beschriebener Weise die Thermobimetallspiralfeder 139 an.

Figur 6a) verdeutlicht die Ausgangsstellung des Scheibenpaketes 112, 116, 121, 122, 123, 140 bei Raumtemperatur, d. h. etwa 20°C. Bei dieser Temperatur ist die Thermobimetallspiralfeder 139 entspannt, so dass die Öffnungen 129, 134 der ersten und der zweiten Scheibe 121, 122 nicht mit den Öffnungen 126 der dritten Scheibe 123 axial fluchten. Insofern kann kein im Schwamm 116 aufgenommenes Produkt in die Umgebung der Dosiervorrichtung 110 austreten.

Bei Temperaturerhöhung, wie es mit Figur 6b) verdeutlicht wird verkürzt sich die Thermobimetallspiralfeder 139 und bewegt somit die vierte Scheibe 140 innerhalb der Figur 6b) nach links. Da die erste Scheibe 121 über zumindest ein Kugeldruckstück 113 mit der vierten Scheibe 140 gekoppelt ist, wird auch die erste Scheibe 121 gleichermaßen mitbewegt, bis das Langloch 136 der ersten Scheibe 122 an den Stift 137 der zweiten Scheibe 122 in Umfangsrichtung anschlägt. Die Öffnungen 126, 129, 134 in den drei Scheiben 121, 122, 123 fluchten auch bei dieser Temperatur von etwa 30°C nicht, wodurch noch immer kein abzugebendes Produkt austreten kann.

Eine weitere Erwärmung auf eine Temperatur von etwa 45°C führt zu einer fortschreitenden Verkürzung der Thermobimetallspiralfeder 139. Damit bewegt sich neben der vierten 140 und der ersten Scheibe 121 über den Stiftanschlag 137 im Langloch 136 auch die zweite Scheibe 122 innerhalb der Figur 6c) nach links, wobei nach Überwindung einer definierten Grenzkraft das Kugeldruckstück 113 der dritten Scheibe 123 sich in Umfangsrichtung um eine Rastvertiefung 114 der zweiten Scheibe 122 weiterbewegt bis der Stift 130 der zweiten Scheibe 122 im zugehörigen Langloch 127 der dritten Scheibe 123 in Umfangsrichtung anschlägt (siehe Figur 6c). auch bei diesem Temperaturniveau fluchten die Öffnungen 126, 129, 134 in den drei Ventilscheiben 121, 122, 123 fluchten nicht, wodurch nach wie vor kein abzugebendes Produkt aus der Dosiervorrichtung austreten kann.

Eine fortschreitende Temperaturerhöhung über 45°C führt schließlich zu einer zusätzlichen Verkürzung der Thermobimetallspiralfeder 139, so dass die Thermobimetallspiralfeder 139 in Umfangsrichtung (in Figur 6d) nach links) eine Krafteinwirkung auf die vierte Scheibe 140 ausübt. Da sich die Ventilscheiben 121, 122, 123 über die Langlochführungen 127, 136 bereits am Anschlag in Umfangsrichtung befinden und nicht weiter bewegt werden können, rutscht das untere Kugeldruckstück 141 unter Überschreitung einer definierten Grenzkraft folglich in Umfangsrichtung in die nächste zugehörige Rastvertiefung 132. Auf diesem Wege wird auch die Thermobimetallspiralfeder 139 entspannt. Auch in diesem Temperaturbereich > 45°C fluchten die Öffnungen 126, 129, 134 in den Ventilscheiben 121, 122, 123 nicht, wodurch kein abzugebendes Produkt in die Umgebung austreten kann.

Bei beginnender Abkühlung nach Erreichen eines hohen Temperaturniveaus von > 45°C etwa auf eine Temperatur von 40°C dehnt sich die Thermobimetallspiralfeder 139 wieder aus und bewegt in diesem Zuge die vierte Scheibe 140 wieder in entgegen gesetzter Umfangsrichtung, d. h. in Figur 6e) nach rechts. Gleichermaßen wird die mit der vierten Scheibe 140 über das Kugeldruckstück 141 gekoppelte erste Scheibe 121 in Umfangsrichtung mitbewegt, bis die erste Scheibe 121 über das Langloch 136 in Umfangsrichtung am zugehörigen Stift 137 der zweiten Scheibe 122 anschlägt. Bei dieser relativen Rotationsbewegung zwischen erster 121 und zweiter Scheibe 122 ist lediglich das Reibmoment zwischen den Scheiben 121, 122 zu überwinden. Nach erfolgter Relatiwerschiebung zwischen erster 121 und zweiter Scheibe 122 infolge Temperaturabfall fluchten die Öffnungen 126, 129, 134 in den Scheiben 121, 122, 123 der Ventileinheit, so dass abzugebendes Produkt in die Umgebung der Dosiervorrichtung austreten kann (siehe Figur 6e)).

Bei weiterer Abkühlung auf ein Temperaturniveau von circa 30°C dehnt sich die Thermobimetallspiralfeder 139 weiter aus, so dass sich die vierte 140 und auch die erste 121 sowie zweite Scheibe 122 in entgegen gesetzter Umfangrichtung verschieben, gemäß Figur 6f) nach rechts. Im Zuge dieser Scheibenverschiebung rutscht nach Überschreiten einer definierten Grenzkraft das obere Kugeldruckstück 113 der dritten Scheibe 123 um eine zugehörige Rastvertiefung 114 der zweiten Scheibe 122 weiter. Als Resultat daraus fluchten die Öffnungen 126, 129, 134 der Ventilscheiben 121, 122, 123 nicht mehr axial. Damit wird die Freisetzung des abzugebenden Produktes gestoppt.

Bei noch weiterer Abkühlung etwa auf Raumtemperaturniveau, d. h. circa 20°C (wie in Figur 6g) verdeutlicht), und fortschreitender Ausdehnung der Thermobimetallspiralfeder 139 rutscht schließlich auch das untere Kugeldruckstück 141 wieder in die Ausgangsrastvertiefung 132. Somit ist der Ausgangszustand der Dosiervorrichtung 110 ist wieder hergestellt und diese ist bereit für einen weiteren Anwendungszyklus.

### Bezugszeichenliste

- 10, 110: Dosiervorrichtung
- 11, 111: zylindrisches Gehäuse
- 12, 112: Bodenteil
- 13: Deckelteil
- 14: Öffnungen
- 15: Umgebung
- 16, 116: Schwamm
- 17, 117: Ventileinheit
- 21, 121: erste Scheibe
- 22, 122: zweite Scheibe
- 23, 123: dritte Scheibe
- 24, 124: Achszapfen/Welle
- 25: Ausnehmungen mit eckigem Querschnitt
- 26, 126: Öffnungen
- 27, 127: Langloch
- 28: Ausnehmungen mit rundem Querschnitt
- 29, 129: Öffnungen
- 30, 130: Stift
- 31: Spiralfeder
- 32: Bimetallstreifen
- 33: Rastnut
- 34, 134: Öffnungen
- 35: Ausnehmungen mit rundem Querschnitt
- 36, 136: Langloch
- 37, 137: Stift
- 38: Reibscheibe
- 39, 139: Bimetallspiralfeder
- 113, 141: Kugeldruckstück
- 114, 132: Rastvertiefungen
- 140: vierte Scheibe
- 142: Endabschnitt
- 143: Vertiefung
- 144: Druckfeder

## Patentansprüche

1. Verfahren zum Betreiben einer Dosiervorrichtung (10, 110), insbesondere einer Dosiervorrichtung (10, 110) geeignet zur Verwendung in einem Wäschetrockner, wobei ein zu dosierendes Mittel aus der Dosiervorrichtung (10, 110) definiert in eine Umgebung (15) der Dosiervorrichtung (10, 110) abgegeben werden kann, wobei die Dosiervorrichtung (10, 110) umfasst:
eine Reservoireinheit (16, 116) zur Aufnahme eines zu dosierenden Mittels,
eine Ventileinheit (17, 117) zum definierten Öffnen und Schließen eines Ventildurchgangs (26, 29, 34, 126, 129, 134) von der Reservoireinheit (16, 116) in die Umgebung (15) der Dosiervorrichtung (10, 110),
wobei das Öffnen und Schließen des Ventildurchganges (26, 29, 34, 126, 129, 134) in Abhängigkeit eines Verlaufs einer Umgebungstemperatur (T) der Dosiervorrichtung (10, 110) erfolgt,
wobei der Ventildurchgang (26, 29, 34, 126, 129, 134) geöffnet wird, wenn die Umgebungstemperatur (T) absinkt und die Umgebungstemperatur (T) über einer ersten und/oder zweiten definierten Mindesttemperatur liegt, **dadurch gekennzeichnet, dass** der Ventildurchgang (26, 29, 34, 126, 129, 134) geschlossen wird, wenn die Umgebungstemperatur ansteigt.

2. Verfahren nach Anspruch 1, **dadurch gekennzeichnet dass** der Ventildurchgang (26, 29, 34, 126, 129, 134) geschlossen wird, wenn die Umgebungstemperatur unter eine definierte zweite Mindesttemperatur sinkt.

3. Verfahren nach einem der Ansprüche 1 oder 2, **dadurch gekennzeichnet dass** die Ventileinheit (17, 1 17) ein erstes Ventilmittel (21 , 121) und ein zweites Ventilmittel (22, 122) umfassen, die jeweils zwischen einem Freigabezustand und einem Schließzustand überführbar sind, wobei der Ventildurchgang (26, 29, 34, 126, 129, 134) durch Überführen zumindest eines der Ventilmittel (21, 22, 121, 122) in dessen Schließzustand geschlossen wird.

4. Verfahren nach dem vorherigen Anspruch, **dadurch gekennzeichnet, dass** eines der Ventilmittel, insbesondere das erste Ventilmittel (21, 121), zumindest zeitweise bei ansteigender Umgebungstemperatur in den Schließzustand beaufschlagt wird.

5. Verfahren nach einem der Ansprüche 3 oder 4, **dadurch gekennzeichnet, dass** eines der Ventilmittel, insbesondere das erste Ventilmittel (21, 121), nur bei sinkender Umgebungstemperatur in den Freigabezustand überführt wird.

6. Verfahren nach einem der Ansprüche 3 bis 5, **dadurch gekennzeichnet, dass** eines der Ventilmittel, insbesondere das zweite Ventilmittel (22, 122), nur in den Freigabezustand überführt wird, wenn die Umgebungstemperatur über der ersten definierten Mindesttemperatur liegt.

7. Verfahren nach einem der Ansprüche 3 bis 6, **dadurch gekennzeichnet, dass** eines der Ventilmittel, insbesondere das zweite Ventilmittel (22, 122), bei Unterschreiten einer zweiten definierten Mindesttemperatur in den Schließzustand überführt wird.

8. Verfahren nach einem der Ansprüche 3 bis 7, **dadurch gekennzeichnet, dass** das eines der Ventilmittel, insbesondere das zweite Ventilmittel (22, 122) über Rückstellmittel (31, 139) in den Schließzustand beaufschlagt wird.

9. Verfahren nach einem der Ansprüche 3 bis 8, **dadurch gekennzeichnet, dass** bei Erreichen der ersten definierten Mindesttemperatur der Zustand des zweiten Ventilmittels (22, 122) an den Zustand des ersten Ventilmittels (21, 121) gekoppelt wird.

10. Verfahren nach dem vorherigen Anspruch, **dadurch gekennzeichnet, dass** bei Unterschreiten einer zweiten definierten Mindesttemperatur der Zustand des zweiten Ventilmittels (22, 122) von dem Zustand des ersten Ventilmittels (21, 121) entkoppelt wird.

11. Verfahren nach einem der Ansprüche 1 bis 10, **dadurch gekennzeichnet, dass** wahrend eines Anstiegs der Umgebungstemperatur Energie aus der Umgebung von der Dosiervorrichtung (10, 110) aufgenommen und gespeichert wird, wobei die gespeicherte Energie während eines Absinkens der Umgebungstemperatur zum Öffnen des Ventildurchgangs (26, 29, 34, 126, 129, 134) verwendet wird.

## Claims

1. A method for operating a metering device (10, 110), in particular a metering device (10, 110) suitable for use in a clothes dryer, an agent to be metered being dispensable from the metering device (10, 110) in a defined manner to a surrounding area (15) of the metering device (10, 110), the metering device (10, 110) comprising:
a reservoir unit (16, 116) for receiving an agent to be metered;
a valve unit (17, 117) for the defined opening and closing of a valve passage (26, 29, 34, 126, 129, 134) of the reservoir unit (16, 116) to the surrounding area (15) of the metering device (10, 110);
the opening and closing of the valve passage (26, 29, 34, 126, 129, 134) taking place as a function of a progression of an ambient temperature (T) of the metering device (10, 110); and
the valve passage (26, 29, 34, 126, 129, 134) being opened when the ambient temperature (T) drops and the ambient temperature (T) is above a first and/or second defined minimum temperature, **characterized in that** the valve passage (26, 29, 34, 126, 129, 134) is closed when the ambient temperature rises.

2. The method according to claim 1, **characterized in that** the valve passage (26, 29, 34, 126, 129, 134) is closed when the ambient temperature drops below a defined second minimum temperature.

3. The method according to either claim 1 or 2, **characterized in that** the valve unit (17, 1 17) comprises a first valve means (21, 121) and a second valve means (22, 122), which can each be transferred between a release state and a closed state, the valve passage (26, 29, 34, 126, 129, 134) being closed by transferring at least one of the valve means (21, 22, 121, 122) into the closed state thereof.

4. The method according to the preceding claim, **characterized in that** one of the valve means, in particular the first valve means (21, 121), is urged into the closed state at least at intervals when the ambient temperature rises.

5. The method according to either claim 3 or 4, **characterized in that** one of the valve means, in particular the first valve means (21, 121), is transferred into the release state only when the ambient temperature drops.

6. The method according to any one of claims 3 to 5, **characterized in that** one of the valve means, in particular the second valve means (22, 122), is transferred into the release state only if the ambient temperature exceeds the first defined minimum temperature.

7. The method according to any one of claims 3 to 6, **characterized in that** one of the valve means, in particular the second valve means (22, 122), is transferred into the closed state when a drop below a second defined minimum temperature occurs.

8. The method according to any one of claims 3 to 7, **characterized in that** one of the valve means, in particular the second valve means (22, 122), is urged into the closed state via restoring means (31, 139).

9. The method according to any one of claims 3 to 8, **characterized in that** the state of the second valve means (22, 122) is coupled to the state of the first valve means (21, 121) when the first defined minimum temperature is reached.

10. The method according to the preceding claim, **characterized in that** the state of the second valve means (22, 122) is decoupled from the state of the first valve means (21, 121) when a drop below a second defined minimum temperature occurs.

11. The method according to any one of claims 1 to 10, **characterized in that** energy is absorbed from the surrounding area by the metering device (10, 110) and stored during an increase in the ambient temperature, the stored energy being used to open the valve passage (26, 29, 34, 126, 129, 143) during a drop in the ambient temperature.

## Revendications

1. Procédé pour faire fonctionner un dispositif de dosage (10,110), en particulier un dispositif de dosage (10, 110) adapté pour être utilisé dans un sèche-linge, un agent à doser pouvant être délivré par le dispositif de dosage (10, 110) de façon définie dans un environnement (15) du dispositif de dosage (10, 110), le dispositif de dosage (10 110), comprenant :
un réservoir (16, 116) destiné à recevoir un agent à doser,
une vanne (17, 117) destinée à ouvrir et fermer de façon définie un passage de vanne (26, 29, 34, 126, 129, 134) allant du réservoir (16, 116) dans l'environnement (15) du dispositif de dosage (10, 110),
l'ouverture et la fermeture du passage de vanne (26, 29, 34, 126, 129, 134) étant effectuées en fonction de l'allure de la température (T) de l'environnement du dispositif de dosage (10, 110),
le passage de vanne (26, 29, 34, 126, 129, 134) étant ouvert lorsque la température (T) de l'environnement chute et que la température (T) de l'environnement se trouve au-dessus d'une première et/ou d'une deuxième température minimale définie, **caractérisé en ce que** le passage de vanne (26, 29, 34, 126, 129, 134) est fermé lorsque la température de l'environnement augmente.

2. Procédé selon la revendication 1, **caractérisé en ce que** le passage de vanne (26, 29, 34, 126, 129, 134) est fermé lorsque la température de l'environnement chute au-dessous d'une deuxième température minimale définie.

3. Procédé selon l'une des revendications 1 ou 2, **caractérisé en ce que** la vanne (17, 117) comporte un premier moyen de vanne (21 121) et un deuxième moyen de vanne (22, 122) qui peuvent chacun être déplacés entre un état ouvert et un état fermé, le passage de vanne (26, 29, 34, 126, 129, 134) étant fermé par passage de l'un au moins des moyens de vanne (21, 22, 121, 122) dans son état fermé.

4. Procédé selon la revendication précédente, **caractérisé en ce que** l'un des moyens de vanne, en particulier le premier moyen de vanne (21, 121), est au moins temporairement contraint à l'état fermé lorsque la température de l'environnement augmente.

5. Procédé selon l'une des revendications 3 ou 4, **caractérisé en ce que** l'un des moyens de vanne, en particulier le premier moyen de vanne (21, 121), est passé à l'état ouvert uniquement lorsque la température de l'environnement diminue.

6. Procédé selon l'une des revendications 3 à 5, **caractérisé en ce que** l'un des moyens de vanne, en particulier le deuxième moyen de vanne (22, 122), est passé uniquement à l'état ouvert lorsque la température de l'environnement se trouve au-dessus de la première température minimale définie.

7. Procédé selon l'une des revendications 3 à 6, **caractérisé en ce que** l'un des moyens de vanne, en particulier le deuxième moyen de vanne (22, 122), est passé à l'état fermé en cas de chute au-dessous d'une deuxième température minimale définie.

8. Procédé selon l'une des revendications 3 à 7, **caractérisé en ce que** l'un des moyens de vanne, en particulier le deuxième moyen de vanne (22, 122), est contraint à l'état fermé par des moyens de rappel (31, 139).

9. Procédé selon l'une des revendications 3 à 8, **caractérisé en ce que**, lorsque la première température minimale définie a été atteinte, l'état du deuxième moyen de vanne (22, 122) est couplé à l'état du premier moyen de vanne (21, 121).

10. Procédé selon la revendication précédente, **caractérisé en ce que**, en cas de chute au-dessous d'une deuxième température minimale définie, l'état du deuxième moyen de vanne (22, 122) est découplé de l'état du premier moyen de vanne (21, 121).

11. Procédé selon l'une des revendications 1 à 10, **caractérisé en ce que**, lors d'une augmentation de la température de l'environnement, l'énergie provenant de l'environnement est absorbée et stockée par le dispositif de dosage (10, 110), l'énergie stockée étant utilisée pendant une diminution de la température de l'environnement pour ouvrir le passage de vanne (26, 29, 34, 126, 129, 134).
